# EUROPÄISCHE PATENTSCHRIFT

(11) **EP 2 336 787 B1**
(45) Veröffentlichungstag und Bekanntmachung des Hinweises auf die Patenterteilung: **05.03.2014**
(21) Anmeldenummer: 10189214.9
(22) Anmeldetag: 28.10.2010
(51) Int. Cl.: G01P 5/06

(54) **Windmessgerät**
Anemometer
Appareil de mesure du vent

(30) Priorität: 01.12.2009 CH 18422009
(43) Veröffentlichungstag der Anmeldung: 22.06.2011
(73) Patentinhaber: Flytec AG, 6048 Horw (CH)
(72) Erfinder: Lerch, Erich, 6206, 6206 Neuenkirch (CH); Joder, Peter, 6010, Kriens (CH)
(74) Vertreter: Troesch Scheidegger Werner AG

(56) Entgegenhaltungen:
- DE-U1- 9 110 946
- US-A- 5 939 645

## Beschreibung

Die vorliegende Erfindung betrifft ein Windmessgerät gemäss dem Obergriff nach Anspruch 1.

Windmessgeräte wie insbesondere Windräder zum Messen der Windgeschwindigkeit sind bekannt. So beschreiben beispielsweise das EP 1 596 062, GB 765 206 sowie das US 5 939 645 Messgeräte zum Bestimmen der Windgeschwindigkeit, wobei ein Flügelrad in einem zylindrischen bzw. rohrförmigen Windkanal konzentrisch gelagert, frei drehbar angeordnet ist. Dabei wird das zylinderartige Rohr mit dem drehbaren Flügelrad in den Windstrom gebracht und die Windgeschwindigkeit durch die Rotation des Flügelrades bestimmt.

Es hat sich nun gezeigt, dass bei unterschiedlicher Neigung des rohrförmigen Kanals abweichende Messresultate ermittelt werden, das heisst, die oben beschriebenen Windmessgeräte haben den Nachteil, dass die resultierende Drehzahl des Flügelrades abhängig vom Winkel ist, mit welchem der rohrförmige Kanal in den Windstrom eingegeben wird.

Es ist daher eine Aufgabe der vorliegenden Erfindung ein Windmessgerät, aufweisend ein Flügelrad vorzuschlagen, bei welchem die ermittelte Windgeschwindigkeit weitgehendst oder mindestens zu einem grossen Teil unabhängig ist von der Neigung mit der das Gerät von einer Benutzerperson in den Wind gebracht wird. Die Windrichtungsabhängigkeit bezüglich der Windrichtung bleibt selbstverständlich erhalten.

Erfindungsgemäss wird die gestellte Aufgabe mittels einem Windmessgerät nach Anspruch 1 gelöst.

Vorgeschlagen wird, dass das Windmessgerät, aufweisend ein in einem rohrförmigen Kanal angeordnetes freidrehbares Flügelrad zum Messen der Windgeschwindigkeit im Eingangsquerschnitt des rohrförmigen Kanals, eine Abdeckung aufweist, welche den Querschnitt teilweise abdeckt.

Gemäss einer weiteren Ausführungsvariante wird vorgeschlagen, sowohl im Eingangsquerschnitt des rohrförmigen Kanales wie auch am Ausgangsquerschnitt je eine Abdeckung anzuordnen, welche zueinander gegenläufig angeordnet sind.

Die Abdeckung, je des Querschnittes, kann bezogen auf die Gesamtfläche des Querschnittes bis zu 35% betragen.

Vorgeschlagene Varianten weisen eine Abdeckung auf, welche beispielsweise bezogen auf die Gesamtfläche 10% - 25% des Ein- und Ausgangsquerschnittes abdecken, wobei selbstverständlich die Grösse der Abdeckung auch weniger als 10% oder mehr als 25% betragen kann.

Die Abdeckung kann vom Rohrinnern gesehen auswärts angewinkelt verlaufend sein, wobei die auswärts verlaufende Abdeckung auch gegen das Zentrum hin gebogen ausgebildet sein kann.

Weitere mögliche Ausführungsvarianten des erfindungsgemässen Windmessgerätes sind in den abhängigen Ansprüchen charakterisiert.

Die Erfindung wird nun beispielsweise und unter Bezug auf die beigefügten Figuren näher erläutert.

Dabei zeigen:
Figur 1a ein herkömmliches Windmessgerät in Front-Draufsicht,
Figur 1b Schematisch die übliche Gebrauchslage des Messgerätes mit der Definition der Winkel
Figur 2 einen Querschnitt durch das Windmessgerät, angewinkelt in einem Windstrom,
Figur 3 auszugsweise den Windmessbereich eines Windmessgerätes, aufweisend erfindungsgemäss vorgeschlagene Abdeckungen und
Figur 4 anhand eines Diagrames die Auswirkungen der erfindungsgemässen Abdeckungen auf die gemessene Windgeschwindigkeit.

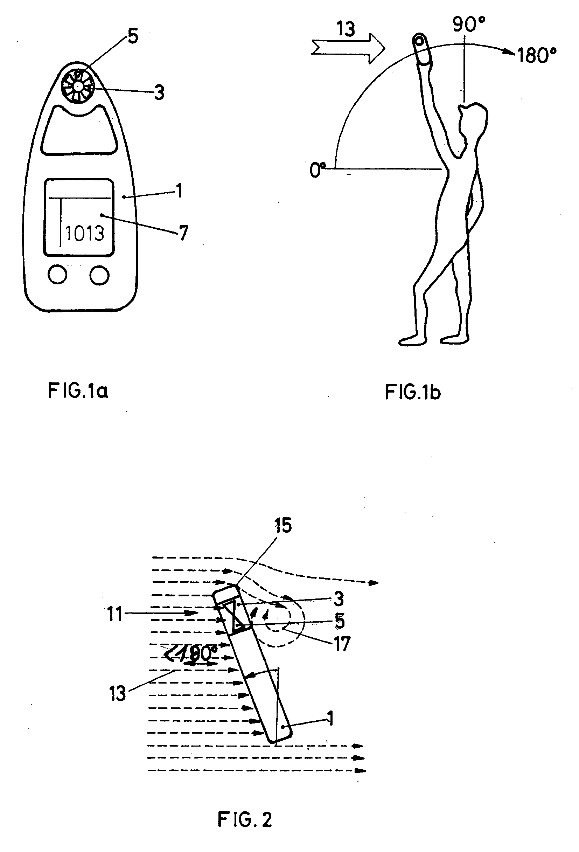

Figur 1 zeigt in Front-Draufsicht ein herkömmliches Windmessgerät 1, aufweisend im oberen Bereich einen Windmesskanal 3, in welchem ein Flügelrad 5 angeordnet ist.

Die vom Windmessgerät 1 ermittelte Windgeschwindigkeit kann beispielsweise an einem Display 7 dargestellt werden.

Zum Messen der Windgeschwindigkeit wird nun das Windmessgerät 1, wie dargestellt in Figur 1a in einen Windstrom 13 gehalten, wie schematisch in Figur 2 dargestellt. Dabei zeigt Figur 2 das Windmessgerät 1 im Querschnitt, wobei der Windstrom 13 durch den offenen Durchgang 11 des Windkanals strömt, im welchem das Flügelrad 5 frei drehbar angeordnet ist. In Figur 2 ist dabei das Windmessgerät geneigt im Luftstrom 13 angeordnet, wodurch hinter der oberen Kante 15 ein Staueffekt zu beobachten ist, was zu Wirbelbildung 17 führt. Der Effekt lässt sich durch eine Wirbelbildung im Lee des Gehäuses oder eine Geschwindigkeitserhöhung des Luftstromes erklären. Die Schräglage führt zu erhöhten Luftgeschwindigkeiten hinter dem Flügelrad 5. Dies bewirkt nach Bernoulli einen Unterdruck, das heisst das Druckgefälle zwischen Vorderseite des Luftkanales und Rückseite steigt an. Dies wiederum führt zu erhöhten Luftgeschwindigkeiten am Flügelrad 5 und deshalb zu einer erhöhten Drehzahl.

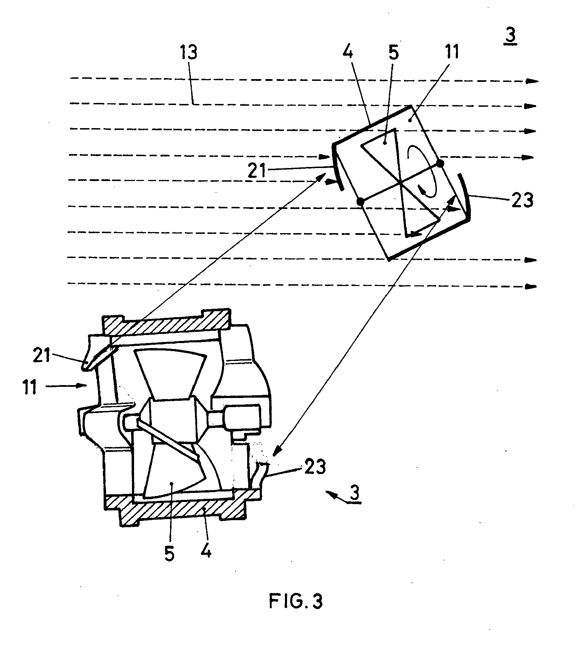

Erfindungsgemäss kann diese Eigenschaft nun gezielt genutzt werden, um die Kurve in einem weiten Schwenkbereich zu linearisieren. Erfindungsgemäss vorgeschlagen wird, mindestens beim eintrendenden Luftstrom eine Abdeckung vorzusehen. Wie schematisch in Figur 3 dargestellt, kann gegenläufig vorne und hinten der Luftstrom 13 gezielt abgedeckt werden. Dies erfolgt durch Abdeckungen 21 am Eingang des Luftstromes im Windkanal 11 und gegenläufig hinten durch das Anordnen einer Abdeckung 23. Dabei zeigt Figur 3 einerseits im Schnitt ausschnittsweise den Windmesskanal 11, gebildet durch das zylinderförmige Rohr 4, sowie das im Rohr konzentrisch und frei drehbar angeordnete Flügelrad 5. Ebenfalls in Figur 3 ist in Perspektive eine Ausführungsvariante des Windmessgerätes 3 dargestellt.

Mit der richtigen Wahl der Abdeckungen 21 und 23 erhält man beispielsweise in einem Bereich von 90° bis 60° eine weitgehend lineare Kurve.

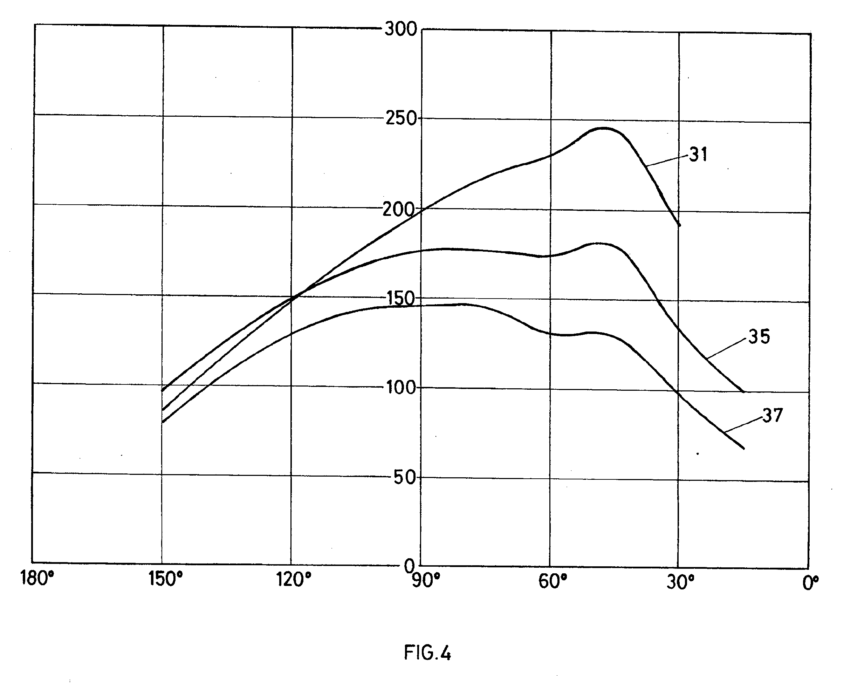

Anhand des Diagrammes, dargestellt in Figur 4, soll gezeigt werden, welchen Einfluss die Abdeckungen auf die vom Flügelrad 5 gemessene Luftgeschwindigkeit hat. Dabei wird die Luftgeschwindigkeit durch die Frequenz (u/s) des Flügelrades dargestellt und andererseits werden die Werte in Abhängigkeit des Neigewinkels des Windmessgerätes in Bezug auf die Windrichtung dargestellt, analog der Darstellung gemäss Figur 1b.

In Figur 4 sind die Messwerte für 3 verschiedene Messanordnungen dargestellt; wobei der Anströmwinkel gemäss Figur 1b angegeben ist.

Kurve 31 zeigt die Drehfrequenz (u/s) des Flügelrades in Abhängigkeit des Neigewinkels für ein Flügelrad ohne Rohreinfassung 4.

Kurve 35 zeigt die Frequenz bei einer Abdeckung von 25% des Eingangs- und Ausgangsquerschnittes des Luftkanales und

Kurve 37 zeigt die Frequenz bei 33,3 prozentiger Flächenabdeckung des Eingangs- und Ausgangsquerschnittes des Durchgangskanals 11.

Dabei zeigt sich deutlich, dass die beiden Kurven 35 und 37 wesentlich flacher ausgebildet sind als die Kurve 31, was auf eine Linearisierung der Durchgangsgeschwindigkeit durch das Windmessgerät schliessen lässt.

Bei dem in Figur 3 dargestellten Beispiel einer Abdeckung für ein erfindungsgemässes Windmessgerät handelt es sich selbstverständlich nur um ein Beispiel, um die vorliegende Erfindung verständlich darzulegen. Selbstverständlich ist es möglich, unterschiedliche Abdeckungen zu wählen, beispielsweise nur eine Abdeckung beim Eingangsquerschnitt, zwei Abdeckungen, welche beispielsweise gegenläufig vorne und hinten im Luftkanal angeordnet sind, Abdeckungen, welche nur 10% je des Eingangs- und Ausgangsquerschnittes bedecken, oder 20%, 25%, 30% oder gar 35%. Letztendlich ist es eine Frage der Optimierung der Gehäusegrösse des Windmessgerätes, der Grösse des Durchgangskanales, der Art des Flügelrades, der Bereich im welchem ein Windmessgerät in der Regel geneigt in den Windstrom behalten wird, etc.

Erfindungswesentlich ist, dass mindestens im Eingangsquerschnitt zum Durchgangskanal, in welchem ein Flügelrad angeordnet ist, eine Abdeckung vorgesehen ist, wobei bevorzugt diese Abdeckung von derjenigen Querschnittskante gegen das Zentrum hin sich ausdehnend angeordnet ist, welche in der Regel gegen den Luftstrom hin geneigt wird.

## Patentansprüche

1. Windmessgerät (3) aufweisend ein in einem rohrförmigen Kanal (4,11) angeordnetes achsgelagertes, freidrehbares Flügelrad (5) zum Messen der Windgeschwindigkeit, **dadurch gekennzeichnet, dass** der Eingangsquerschnitt des rohrförmigen Kanals (11) durch eine Abdeckung (21) teilweise abgedeckt ist, wobei die Abdeckung so angeordnet ist dass die ermittelte Windgeschwindigkeit weitgehendst oder mindestens zu einem grossen Teil unabhängig ist von der Neigung mit der das Gerät von einer Benutzerperson in den Wind gebracht wird.

2. Windmessgerät nach Anspruch 1, **dadurch gekennzeichnet, dass** der Durchgangskanal (11) sowohl eingangseitig wie auch rückseitig je zueinander gegenläufig teilweise abgedeckt ist.

3. Windmessgerät nach Anspruch 1 oder 2, **dadurch gekennzeichnet, dass** die Abdeckung eingangseitig von derjenigen Querschnittskante gegen das Zentrum hin verlaufend ausgebildet ist, welche vorgesehen ist, um gegen die Windrichtung geneigt zu werden.

4. Windmessgerät nach einem der Ansprüche 1 bis 3, **dadurch gekennzeichnet, dass** der Kanalquerschnitt bis ca. 35% bezogen auf die Querschnittsfläche abgedeckt ist.

5. Windmessgerät nach einem der Ansprüche 1 bis 4, **dadurch gekennzeichnet, dass** die Querschnittsfläche ca. 10% - 25%, bezogen auf die Gesamtfläche, abgedeckt ist.

6. Windmessgerät nach einem der Ansprüche 1 bis 5, **dadurch gekennzeichnet, dass** die Abdeckung vom Kanalinnern gesehen, schräg nach aussen verlaufend ausgebildet ist, vorzugsweise von der Kante zum Zentrum hin einwärts gebogen.

7. Windmessgerät nach einem der Ansprüche 1 bis 6, **dadurch gekennzeichnet, dass** der Kanal zylinderförmig ausgebildet ist mit kreisförmiger Eingangs- und Ausgangsquerschnittsfläche und wobei die Abdeckung kreissegmentartig ausgebildet ist.

## Claims

1. Anemometer (3) comprising an axle-beared, freely rotatable impeller (5) arranged in a tubular conduit (4,11) for measuring the wind velocity, **characterized in that** the inlet cross section of the tubular channel (11) is partially covered by a cover (21), wherein the cover is arranged such that the determined wind velocity is substantially or at least to a great extent independent of the inclination at which the anemometer is brought into the wind by a user.

2. Anemometer according to claim 1, **characterized in that** the passage channel (11) both on the input side as well as on the back side is each partially covered in a manner opposite to other.

3. Anemometer according to claim 1 or 2, **characterized in that** the cover is formed to extend on the input side from the cross-sectional edge, which is intended to be inclined against the wind direction, towards the centre.

4. Anemometer according to one of claims 1 to 3, **characterized in that** the channel cross-section is covered to about 35% relative to the cross-sectional area.

5. Anemometer according to one of claims 1 to 4, **characterized in that** the cross-sectional area is covered about 10% - 25% relative to the total area.

6. Anemometer according to one of claims 1 to 5, **characterized in that** the cover as seen from the channel inside, is formed to extend obliquely towards the outside, preferably bent inwardly from the edge towards the centre.

7. Anemometer according to one of claims 1 to 6, **characterized in that** the channel is formed cylindrically with circular entrance and exit cross-sectional area, and wherein the cover is formed like a circular segment.

## Revendications

1. Appareil de mesure du vent (3) présentant une roue à ailettes (5) à rotation libre, logée axialement, disposée dans un canal (4, 11) tubulaire, servant à mesurer la vitesse du vent, **caractérisé en ce que** la section transversale d'entrée du canal (11) tubulaire est recouverte en partie par un élément de recouvrement (21), sachant que l'élément de recouvrement est disposé de telle manière que la vitesse du vent déterminée dépend largement ou du moins pour une grande partie, de l'inclinaison à laquelle l'appareil est placé par un utilisateur dans le vent.

2. Appareil de mesure du vent selon la revendication 1, **caractérisé en ce que** le canal de passage (11) est recouvert en partie aussi bien côté entrée que côté arrière en sens contraire l'un par rapport à l'autre.

3. Appareil de mesure du vent selon la revendication 1 ou 2, **caractérisé en ce que** l'élément de recouvrement est réalisé côté entrée de manière à s'étendre depuis le bord de section transversale en direction du centre, ledit bord de section transversale étant prévu pour être incliné dans le sens opposé au sens du vent.

4. Appareil de mesure du vent selon l'une quelconque des revendications 1 à 3,
**caractérisé en ce que** la section transversale du canal est recouverte à hauteur d'environ 35 %.

5. Appareil de mesure du vent selon l'une quelconque des revendications 1 à 4,
**caractérisé en ce que** la surface de section transversale est recouverte sur environ 10 % à 25 % par rapport à la surface totale.

6. Appareil de mesure du vent selon l'une quelconque des revendications 1 à 5,
**caractérisé en ce que** l'élément de recouvrement est réalisé, vu depuis l'intérieur du canal, de manière à s'étendre de manière oblique vers l'extérieur, de préférence est cintré vers l'intérieur en partant du bord en direction du centre.

7. Appareil de mesure du vent selon l'une quelconque des revendications 1 à 6,
**caractérisé en ce que** le canal est réalisé en forme cylindrique avec une face d'entrée et une face de sortie de section transversale de forme circulaire, sachant que l'élément de recouvrement est réalisé à la manière d'une portion de cercle.
